# FASCICULE DE BREVET EUROPEEN

(11) **EP 3 777 103 B1**
(45) Date de publication et mention de la délivrance du brevet: **23.02.2022**
(21) Numéro de dépôt: 19717531.8
(22) Date de dépôt: 14.03.2019
(51) Int. Cl.: H04L 29/08, G06F 8/61

(54) **DISPOSITIF DE CONTRÔLE DE L'ACCÈS À UN CALCULATEUR EN VUE DE SON RÉVEIL ET DE L'ACTIVATION D'UNE INTERFACE DE COMMUNICATION**
VORRICHTUNG ZUR STEUERUNG DES ZUGRIFFS AUF EINEN COMPUTER, UM DIESEN AUFZUWECKEN UND EINE KOMMUNIKATIONSSCHNITTSTELLE ZU AKTIVIEREN
DEVICE FOR CONTROLLING ACCESS TO A COMPUTER FOR WAKING UP SAME AND ACTIVATING A COMMUNICATION INTERFACE

(30) Priorité: 27.03.2018 FR 1852619
(43) Date de publication de la demande: 17.02.2021
(73) Titulaire: PSA Automobiles SA, 78300 Poissy (FR)
(72) Inventeur: TISON, Pascal, 92160 ANTONY (FR); SCHMIDT, Pierre, 95240 CORMEILLES EN PARISIS (FR); MARCHAND, Jean-sebastien, 91580 VILLECONIN (FR); CASTELPIETRA, Paolo, 78350 JOUY EN JOSAS (FR)
(86) Numéro de dépôt international: PCT/FR2019/050561
(87) Numéro de publication internationale: WO 2019/186012

(56) Documents cités:
- EP-A1- 2 339 778
- DE-A1-102015 105 112
- US-A1- 2014 075 231

## Description

L'invention concerne les calculateurs qui peuvent être placés dans un état de veille et réveillés par un signal externe.

Dans certains domaines, comme par exemple celui des véhicules, éventuellement de type automobile, on utilise des calculateurs qui sont initialement installés avec un programme mais sans configuration spécifique, et donc qui doivent être, après installation, configurés par une mise à jour logicielle (ou « software ») téléchargée. Dans le cas d'un véhicule, ce téléchargement est réalisé sur la chaîne de production pendant une étape ayant une durée prédéfinie, après connexion temporaire par un technicien d'un outil de configuration (contenant le logiciel) à un connecteur embarqué (par exemple la prise de diagnostic) auquel est couplé de façon permanente un premier calculateur concerné. Ce dernier est généralement un équipement de supervision qui est notamment chargé de piloter des relais d'alimentation électrique d'équipements électriques du véhicule qui sont connectés à un réseau de communication de ce dernier (éventuellement de type multiplexé), et donc permet d'accéder à d'autres calculateurs à programmer.

Pour que le téléchargement puisse être réalisé, il faut que le premier calculateur ait été réveillé par un premier signal (de réveil) puis que son interface de communication (par exemple de type Ethernet) ait été activée par un second signal (d'activation). EP2339778 décrit une solution pour transmettre de tels signaux de réveil via des broches. Dans un autre exemple, dans un véhicule le premier signal est généré consécutivement à la mise du contact par un technicien sur la chaîne de production, et le second signal est généré par l'outil de configuration sur ordre de ce même technicien.

Cette mise du contact impose que le technicien pénètre dans l'habitacle du véhicule et utilise une clé de démarrage et/ou actionne un bouton de démarrage, puis que l'outil de configuration vérifie que le premier calculateur a été effectivement réveillé par cette mise du contact, par mesure de la tension sur l'une des broches du connecteur (par exemple la n°1). Une fois cette vérification effectuée, le technicien est invité par l'outil de configuration à sortir de l'habitacle du véhicule dans un intervalle de temps prédéfini (typiquement cinq secondes). Puis, l'outil de configuration transmet au premier calculateur un signal d'activation destiné à activer son interface de communication, via la broche du connecteur qui est dédiée à cette interface de communication (par exemple la n°8). Puis, l'out| de configuration commence à transmettre les logiciels aux différents calculateurs via les broches du connecteur qui sont dédiées à la communication et couplées à l'interface de communication.

Lorsque le réveil du premier calculateur ne s'est pas déroulé correctement, par exemple du fait d'une mauvaise manipulation du technicien, ce dernier doit rester dans l'habitacle et effectuer une nouvelle mise en marche, ce qui rallonge la durée de la phase de téléchargement, et peut induire un ralentissement de la chaîne de production.

Par ailleurs, lorsque le téléchargement du logiciel dans l'un des calculateurs échoue (par exemple en cas d'arrachement involontaire du câble reliant l'outil de configuration au connecteur embarqué), le véhicule doit être dérouté vers une zone de retouche. Dans ce cas si le téléchargement dans le premier calculateur a échoué, le calculateur n'a pas de logiciel applicatif en mémoire, et ne possède qu'un programme d'amorçage (ou « Bootloader ») permettant de lancer un nouveau téléchargement. Ce programme d'amorçage ne possédant pas de fonctionnalité permettant de maintenir le premier calculateur réveillé, un technicien doit donc de nouveau pénétrer dans l'habitacle du véhicule et utiliser la clé de démarrage et/ou actionner le bouton de démarrage durant la totalité du téléchargement (typiquement entre trente secondes et une minute).

L'invention a donc notamment pour but d'améliorer la situation, notamment en réduisant le nombre d'opérations manuelles que doit effectuer le technicien pendant une phase de téléchargement de logiciel dans un calculateur.

Elle propose notamment à cet effet un dispositif de contrôle selon la revendication 1.

Grâce à ce dispositif de contrôle, l'outil de configuration peut désormais réveiller et maintenir réveillé le calculateur pendant la phase de téléchargement, de façon automatisée et donc sans intervention manuelle d'un technicien.

Le dispositif de contrôle selon l'invention peut comporter d'autres caractéristiques qui peuvent être prises séparément ou en combinaison, et notamment :
- ses moyens de contrôle peuvent comprendre, d'une part, des moyens d'aiguillage comportant une entrée destinée à être couplée à la broche d'activation, une première sortie, et une seconde sortie destinée à être couplée à l'entrée d'activation de l'interface de communication, et connectant leur entrée à leur première ou seconde sortie selon qu'ils sont placés dans un premier état ou un second état, et, d'autre part, des moyens de commande comportant une entrée couplée à la première sortie des moyens d'aiguillage et une sortie destinée à être couplée à l'interface de réveil, et délivrant sur cette sortie le premier signal en cas de placement des moyens d'aiguillage dans leur premier état et de réception par ces derniers d'un signal de réveil issu de l'outil de configuration, ce premier signal induisant un placement des moyens d'aiguillage dans leur second état ;
   ➢ ses moyens de commande peuvent être agencés sous la forme d'une bascule ;
      • la bascule peut être synchrone ou asynchrone ;
   ➢ ses moyens de contrôle peuvent comprendre un inverseur, d'une part, comportant une entrée connectée à la première sortie des moyens d'aiguillage et à une source de tension via une résistance, et une sortie connectée à l'entrée des moyens de commande, et, d'autre part, délivrant sur cette sortie un signal qui est l'inverse d'un signal reçu sur cette entrée ;
   ➢ ses moyens d'aiguillage peuvent comprendre une entrée de sélection connectée à la sortie des moyens de commande, et peuvent passer de leur premier état à leur second état en cas de réception d'un signal de sélection sur leur entrée de sélection ;
   ➢ ses moyens d'aiguillage peuvent être agencés sous la forme d'un multiplexeur analogique.

L'invention propose également un calculateur selon la revendication 8.

L'invention propose également un véhicule selon la revendication 10. Les revendications dépendantes décrivent des modes de réalisation préférés de l'invention.

Par exemple, ce véhicule peut comprendre un réseau de communication auquel sont connectés des équipements électriques, et son calculateur principal (ou premier calculateur) peut être un équipement de supervision qui pilote au moins des relais d'alimentation électrique de ces équipements électriques (qui peuvent eux-mêmes être des calculateurs).

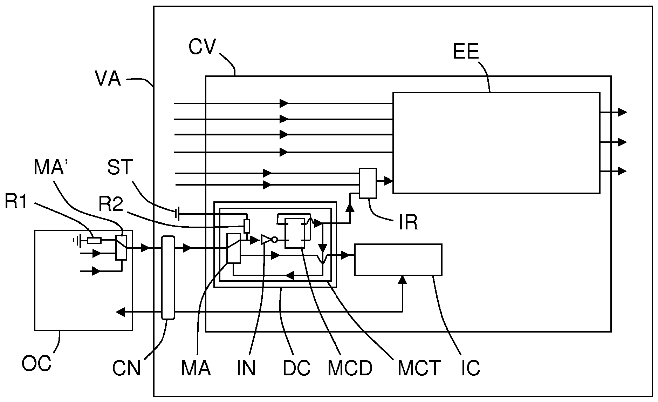

D'autres caractéristiques et avantages de l'invention apparaîtront à l'examen de la description détaillée ci-après, et du dessin annexé, sur lequel l'unique figure illustre schématiquement et fonctionnellement un véhicule équipé d'un connecteur auquel sont connectés un outil de configuration et un calculateur comprenant un exemple de réalisation d'un dispositif de contrôle selon l'invention.

L'invention a notamment pour but de proposer un dispositif de contrôle DC destiné à contrôler l'accès à un calculateur CV en vue de son réveil et de l'activation de son interface de communication IC.

Dans ce qui suit, on considère, à titre d'exemple non limitatif, que le calculateur CV est destiné à équiper un véhicule VA, éventuellement de type automobile (comme par exemple une voiture). Mais l'invention n'est pas limitée à cette application. En effet, le calculateur CV peut équiper n'importe quel type de véhicule (terrestre, maritime (ou fluvial), ou aérien), les appareils (ou systèmes ou dispositifs) électroniques (y compris grand public), et les installations électrifiées (éventuellement de type industriel).

Par ailleurs, on considère dans ce qui suit, à titre d'exemple non limitatif, que le calculateur CV est un équipement de supervision du véhicule VA qui est notamment chargé de piloter des relais d'alimentation électrique d'équipements électriques du véhicule qui sont connectés à un réseau de communication de ce dernier (éventuellement de type multiplexé (par exemple de type CAN (« Controller Area Network »)), et donc permet d'accéder à d'autres calculateurs du véhicule VA à programmer.

On a schématiquement représenté sur l'unique figure un véhicule VA équipé d'un connecteur CN auquel sont connectés un outil de configuration OC (temporairement) et un calculateur CV comprenant ici un exemple de réalisation d'un dispositif de contrôle DC selon l'invention.

Il est important de noter que dans l'exemple illustré non limitativement sur l'unique figure le dispositif de contrôle DC fait partie intégrante du calculateur CV. Mais cela n'est pas obligatoire. En effet, le dispositif de contrôle DC pourrait être indépendant du calculateur CV et intercalé entre ce dernier (CV) et le connecteur CN.

Comme illustré, le calculateur CV comprend une interface de communication IC destinée, une fois activée, à recevoir un logiciel (ou « software ») transmis par l'outil de configuration OC, une interface de réveil IR, et un ensemble d'éléments EE lui permettant d'assurer ses fonctions (par exemple un microcontrôleur devant être réveillé).

L'interface de réveil IR est propre à recevoir un premier signal s1 qui est dédié au réveil du calculateur CV. Dans un véhicule VA, en l'absence de l'outil de configuration OC ce premier signal s1 est généré consécutivement à la mise du contact, tandis qu'en présence de l'outil de configuration OC ce premier signal s1 est généré par le dispositif de contrôle DC, comme on le verra plus loin. Par conséquent, l'interface de réveil IR comprend au moins deux entrées distinctes pour recevoir le premier signal s1 d'au moins deux sources différentes, et une sortie pour délivrer le premier signal s1 à destination de l'ensemble d'éléments EE du calculateur CV. A titre d'exemple l'interface de réveil IR peut être agencée sous la forme d'un composant électronique assurant une fonction logique de type « OU ».

On considère dans ce qui suit, à titre d'exemple non limitatif, que l'interface de communication IC est de type Ethernet. Mais l'invention n'est pas limitée à ce type d'interface de communication. Ainsi, elle concerne également les interfaces de communication de type CAN, par exemple.

Le connecteur CN comprend plusieurs broches dédiées à la communication entre l'outil de configuration OC et le véhicule VA pour l'exécution des diagnostics. Elles sont au nombre de quatre dans le cas d'Ethernet. Il comprend également une broche d'activation (broche numéro 8), définie par la norme DolP ISO 13400-4 dans le cas de l'Ethernet, pour fournir un signal d'activation de l'interface de communication IC. Le connecteur CN comprend également d'autres broches comme par exemple la numéro 1 qui est destinée à informer l'outil de la mise du contact réussie. Lorsqu'il implémente la capacité à communiquer selon Ethernet, le connecteur CN est conforme à la norme DolP ISO 13400-4.

On retrouve les broches précédemment décrites pour le connecteur CN du côté de l'outil de configuration OC. Par conséquent, ce dernier (OC) comprend notamment une ligne d'activation de l'interface Ethernet selon la norme ISO 13400, des lignes dédiées à la communication selon le protocole Ethernet, ainsi qu'une ligne pour d'autres signaux tels que par exemple ceux passant par la broche numéro 1.

Par exemple, et comme illustré non limitativement sur l'unique figure, l'outil de configuration OC peut comprendre des moyens d'aiguillage MA' comportant une première entrée qui est couplée à la masse via une résistance R1, une seconde entrée qui reçoit les signaux destinés à l'activation de l'interface de communication IC, une sortie qui est destinée à être couplée à la broche d'activation du connecteur CN (dédiée à l'activation de l'interface de communication IC (par exemple la numéro 8)) et qui peut être couplée à sa première ou seconde entrée en fonction de l'état dans lequel est placée une entrée de sélection des moyens d'aiguillage MA'.

La mise à la masse de la broche d'activation du connecteur CN au travers d'une résistance R2 plutôt qu'une mise au +12 V de cette même broche d'activation permet de « protéger » l'électronique du côté du véhicule VA. Il peut en effet être dangereux d'appliquer une tension sur une broche, même au travers d'une résistance, avant d'avoir identifié le rôle affecté à cette broche.

A titre d'exemple non limitatif, la résistance R1 peut avoir une valeur comprise entre 500 Ω et 1500 Ω. Le choix de cette valeur est destiné à produire un « 0 » logique « fiable » sur l'entrée d'un inverseur IN sur lequel on reviendra plus loin.

A titre d'exemple non limitatif, les moyens d'aiguillage MA' peuvent être agencés sous la forme d'un multiplexeur analogique de type 2x1 avec une entrée de sélection pour le faire changer d'état (ou de position), et donc pour changer l'entrée qu'il couple à sa sortie. En variante, ils pourraient être agencés sous la forme d'au moins un commutateur (ou « switch ») analogique.

Comme illustré sur l'unique figure, un dispositif de contrôle DC, selon l'invention, comprend des moyens de contrôle MCT qui sont destinés à être intercalés entre, d'une part, la broche d'activation du connecteur CN et, d'autre part, l'interface de réveil IR et l'entrée d'activation de l'interface de communication IC. L'interface de communication IC a ainsi son entrée d'activation qui peut être couplée à la broche d'activation du connecteur CN, laquelle est destinée à être couplée temporairement (mécaniquement) à la sortie de l'outil de configuration OC pour recevoir un second signal s2 (dédié à l'activation de l'interface de communication IC).

Une fois intercalés, ces moyens de contrôle MCT alimentent soit l'interface de réveil IR avec un premier signal s1 s'ils sont placés dans un premier état par l'outil de configuration OC via la broche d'activation, soit l'entrée d'activation de l'interface de communication IC avec un second signal s2 s'ils sont placés dans un second état par l'outil de configuration OC via la broche d'activation.

En d'autres termes, lorsque les moyens de contrôle MCT sont placés dans le premier état par l'outil de configuration OC, ils fournissent à l'interface de réveil IR le premier signal s1 qui va alors alimenter l'ensemble d'éléments EE du calculateur CV afin de réveiller ce dernier (CV). En revanche, lorsque les moyens de contrôle MCT sont placés dans le second état par l'outil de configuration OC, ils fournissent à l'interface de communication IC le second signal s2 qui va alors activer cette dernière (IC). Puis, si l'interface de communication IC du calculateur CV peut présenter deux types de câblage, l'outil de configuration OC va déterminer le type de câblage présent, et ensuite commencer à transmettre le logiciel concerné à l'interface de communication IC, via les broches de communication du connecteur CN.

On notera que dans le cas d'une interface de communication IC de type Ethernet (ISO 13400), la détermination du type de câblage de cette interface de communication IC se fait conformément aux règles définies par la norme ISO 13400-3. Elle se fait en fonction de la tension mesurée sur la broche d'activation n°8 du connecteur CN, en présence d'une tension fournie par une source externe (présente dans l'outil de configuration OC) via une résistance de 4,7 kΩ. Si la tension mesurée sur la broche d'activation n°8 du connecteur CN est supérieure à 53% de la tension fournie par la source externe, alors on est en présence du second type de câblage de l'interface de communication (Ethernet) IC, et donc on déconnecte la résistance de 4,7 kΩ afin d'appliquer à la broche d'activation n°8 une impédance comprise entre 510 Ω et 1000 Ω, puis on utilise les broches 3, 11, 12 et 13 du connecteur CN pour communiquer. En revanche, si la tension mesurée sur la broche d'activation n°8 du connecteur CN est inférieure à53% de la tension fournie par la source externe, on déconnecte la résistance de 4,7 kΩ afin d'appliquer à la broche d'activation n°8 une impédance compriseentre 510 Ω et 1000 Ω, puis si la tension mesurée sur la broche d'activation n°8 est supérieure à 5 V, cela signifie que l'on est en présence du premier type de câblage de l'interface de communication (Ethernet) IC, et donc on utilise les broches 1, 9, 12 et 13 du connecteur CN pour communiquer.

Par exemple, et comme illustré non limitativement sur l'unique figure, les moyens de contrôle MCT peuvent comprendre au moins des moyens d'aiguillage MA et des moyens de commande MCD.

Les moyens d'aiguillage MA comportent une entrée qui est destinée à être couplée à la broche d'activation (numéro 8) du connecteur CN, une première sortie, et une seconde sortie qui est destinée à être couplée à l'entrée d'activation de l'interface de communication IC. De plus, ces moyens d'aiguillage MA sont agencés de manière à connecter leur entrée à leur première ou seconde sortie selon qu'ils sont placés dans un premier état ou un second état.

A titre d'exemple non limitatif, les moyens d'aiguillage MA peuvent être agencés sous la forme d'un multiplexeur analogique de type 1×2 avec une entrée de sélection pour le faire changer d'état (ou de position), et donc pour changer la sortie qu'il connecte à son entrée. En variante, ils pourraient être agencés sous la forme d'au moins un commutateur (ou « switch ») analogique.

Les moyens de commande MCD comportent une entrée qui est couplée à la première sortie des moyens d'aiguillage MA et une sortie qui est destinée à être couplée à l'interface de réveil IR. De plus, ces moyens de commande MCD délivrent (puis de préférence mémorisent) sur leur sortie le premier signal s1 en cas de placement des moyens d'aiguillage MA dans leur premier état et de réception par ces derniers (MA) d'un signal de réveil issu de l'outil de configuration OC. Ce premier signal s1 constitue un signal de sélection qui induit le placement des moyens d'aiguillage MA dans leur second état.

A titre d'exemple non limitatif, les moyens de commande MCD peuvent être agencés sous la forme d'une bascule. Ainsi, il pourra s'agir d'une bascule synchrone (ou en anglais « flip-flop »)), comme par exemple celle connue sous la référence 74HC74. Mais en variante il pourrait s'agir d'une bascule asynchrone (ou verrou (en anglais « latch »)).

Il est rappelé qu'une bascule est un circuit logique qui est capable de maintenir la valeur de l'une au moins de ses sorties lorsque la valeur de l'une de ses entrées change. En d'autres termes, elle a un état dans lequel elle peut mémoriser la valeur de sa sortie.

Comme évoqué précédemment, les moyens d'aiguillage MA peuvent comprendre une entrée de sélection qui peut être connectée à la sortie des moyens de commande MCD. Dans ce cas, les moyens d'aiguillage MA peuvent passer de leur premier état (ou première position) à leur second état (ou seconde position) en cas de réception d'un signal de sélection égal au premier signal s1 sur leur entrée de sélection. On comprendra que ce changement d'état (ou de position) permet de passer de la phase de réveil du calculateur CV à la phase d'activation de l'interface de communication IC, le réveil étant maintenu par les moyens de commande MCD.

On notera également, comme illustré non limitativement sur l'unique figure, que les moyens de contrôle MCT peuvent comprendre un inverseur IN comportant une entrée connectée à la première sortie des moyens d'aiguillage MA et à une source de tension ST via une résistance R2, et une sortie connectée à l'entrée des moyens de commande MCD. Cet inverseur IN est agencé de manière à délivrer sur sa sortie un signal qui est l'inverse du signal qu'il reçoit sur son entrée. Ainsi, les moyens de commande MCD reçoivent sur leur entrée un signal qui est l'inverse du signal qui est délivré sur la sortie des moyens d'aiguillage MA.

L'utilisation d'un tel inverseur IN en amont de l'entrée des moyens de commande MCD permet avantageusement de réduire les risques électriques car du côté de l'outil de configuration OC le signal consiste en une mise à la masse au travers de la résistance R1 de la broche d'activation du connecteur CN plutôt qu'une connexion de cette broche d'activation à une tension positive (broche dont l'affectation peut varier selon le véhicule, certains véhicules avec lesquels l'outil de configuration OC doit rester compatible peuvent en effet présenter une affectation différente de la broche d'activation (numéro 8)). De plus, cela permet d'éliminer une activation intempestive de l'interface de communication IC (l'activation ayant lieu par un mode « pull-up ») pouvant résulter d'une commutation « non synchronisée » des moyens d'aiguillage MA et MA' de la position « haute » (ou premier état) à la position « basse » (ou second état). On notera que l'inverseur IN pourrait être omis en cas d'utilisation d'une bascule dont l'entrée provoquant son changement d'état réagit sur un front descendant (ou niveau « 0 ») pour une bascule asynchrone.

Dans le cas d'un véhicule VA, la source de tension ST peut, par exemple, être une batterie de servitude qui alimente le réseau électrique du véhicule VA et qui est par exemple de type 12 V (ou 24 V).

A titre d'exemple non limitatif, la résistance R2, que l'on peut qualifier de pull-up, peut avoir une valeur comprise entre 4 kΩ et 6 kΩ. Cette valeur doit être choisie afin de produire un « 1 » logique correctement établi sur l'entrée de l'inverseur IN lorsque l'entrée des moyens d'aiguillage MA est déconnectée de l'entrée de l'inverseur IN (position « basse » (ou second état) de MA).

On notera que les moyens d'aiguillage MA peuvent être initialement placés dans leur premier état (ou première position illustrée sur l'unique figure) dans laquelle ils couplent la broche d'activation du connecteur CN à l'entrée de l'inverseur IN dont la sortie pilote l'interface de réveil IR qui va alors alimenter l'ensemble d'éléments EE du calculateur CV afin de réveiller ce dernier (CV). Une fois le réveil effectué, la sortie des moyens de commande MCD délivre un signal de sélection qui provoque le basculement automatique des moyens d'aiguillage MA dans leur second état (ou seconde position), un basculement similaire ayant eu lieu dans l'outil de configuration OC (au niveau de ses moyens d'aiguillage MA').

Le fonctionnement du dispositif de contrôle DC illustré sur l'unique figure est décrit ci-après, pour le cas où la bascule MCD est synchrone et donc comprend une entrée d'horloge qui est connectée à la sortie des moyens d'aiguillage MA, une sortie Q qui est connectée à l'interface de réveil IR et délivre le premier signal s1, une sortie Q barre qui délivre un signal qui est l'inverse de celui délivré par la sortie Q, et une entrée D qui est connectée à sa sortie Q barre.

Par exemple, la sortie Q de la bascule MCD peut être configurée par défaut pour délivrer un signal égal à zéro (0), et au tout début de la phase de réveil les moyens d'aiguillage MA du dispositif de contrôle DC peuvent être placés dans un état dit « haut » qui couple leur entrée à leur première sortie (et illustrée sur l'unique figure), du fait que la sortie Q est à zéro (0). Les moyens d'aiguillage MA' de l'outil de configuration OC sont initialement placés (avant connexion sur le véhicule VA) dans un état dit « haut » qui couple leur première entrée à leur sortie (et illustrée sur l'unique figure), ce qui induit une mise à la valeur zéro (0) de l'entrée de l'inverseur IN, au travers de la résistance R1 de l'outil de configuration OC, car cela revient à raccorder directement la résistance R1 sur l'entrée de l'inverseur IN dont la sortie va donc passer à un (1). Ce changement d'état (de 0 à 1) sur l'entrée d'horloge de la bascule MCD induit un front montant d'horloge qui fait passer la sortie Q de la bascule MCD de zéro (0) à un (1). On considère ici que cette valeur 1 est la valeur du premier signal s1 qui va réveiller le calculateur CV. Dans le même temps, ce changement d'état (de 0 à 1) sur la sortie Q provoque un changement d'état des moyens d'aiguillage MA du dispositif de contrôle DC. Plus précisément, ces moyens d'aiguillage MA passent de leur état haut à leur état dit « bas » qui couple leur entrée à leur seconde sortie et « déconnecte » ainsi la broche d'activation (n°8) de l'entrée de l'inverseur IN. Dans le cas d'une interface de communication IC de type Ethernet (ISO 13400), la détermination du type de câblage de l'interface de communication IC du calculateur CV peut alors se faire conformément aux règles définies par la norme ISO 13400-3 et décrites précédemment. C'est l'outil de configuration OC qui pilote cette détermination car il a lui aussi basculé ses moyens d'aiguillage MA' en position basse.

La phase d'activation de l'interface de communication IC suit la phase de détermination du type de câblage précédemment décrite. Les moyens d'aiguillage MA' et MA étant toujours en position basse (ou second état), cela permet de transmettre un second signal s2 à l'interface de communication IC.

Lorsque la phase d'activation est terminée, l'outil de configuration OC peut commencer à transmettre le logiciel à programmer dans le calculateur CV, à l'interface de communication IC, via les broches du connecteur CN qui sont dédiées au protocole utilisé (3, 11, 12 et 13 pour Ethernet), la broche d'activation (numéro 8) du connecteur CN reste ainsi couplée à la seconde sortie des moyens d'aiguillage MA du dispositif de contrôle DC et maintient ainsi activée l'interface de communication Ethernet IC pendant toute la durée du téléchargement.

On notera que dans le cas d'une bascule MCD synchrone, par exemple de type 74HC74, sa sortie Q peut être initialisée par défaut à la valeur zéro (0) en pilotant ses entrées dites SET et RESET.

Grâce à l'invention, l'outil de configuration OC peut désormais réveiller et maintenir réveillé un calculateur CV pendant sa phase de téléchargement, de façon automatisée et donc sans intervention manuelle d'un technicien. Cela permet notamment, dans le cas d'une implantation du calculateur dans un véhicule, de réduire le temps nécessaire à la fabrication de ce dernier ou de réallouer le temps libéré à d'autres opérations pouvant en avoir besoin. En outre, automatiser une ou plusieurs opérations permet de la/les rendre plus robuste(s).

## Revendications

1. Dispositif de contrôle (DC) pour contrôler l'accès à un calculateur (CV) comprenant une interface de réveil (IR), ledit dispositif de contrôle étant adapté pour émettre un premier signal (s1) dédié au réveil dudit calculateur (CV), ledit calculateur (CV) comprenant aussi
une interface de communication (IC) ayant une entrée d'activation couplée à une broche d'activation d'un connecteur (CN) destinée à être couplée mécaniquement et temporairement à une sortie d'activation d'un outil de configuration (OC), ledit dispositif de contrôle étant adapté pour émettre un second signal (s2) dédié à l'activation de ladite
interface de communication (IC), **caractérisé en ce qu'**il comprend des moyens de contrôle (MCT) alimentant, une fois intercalés entre, d'une part, ladite broche d'activation et, d'autre part, ladite interface de réveil (IR) et ladite entrée d'activation de l'interface de communication (IC), soit ladite interface de réveil (IR) avec ledit premier signal, soit ladite entrée d'activation de l'interface de communication (IC) avec ledit second signal, selon qu'ils sont placés dans un premier état ou un second état par ledit outil de configuration (OC) via ladite broche d'activation.

2. Dispositif selon la revendication 1, **caractérisé en ce que** lesdits moyens de contrôle (MCT) comprennent i) des moyens d'aiguillage (MA) comportant une entrée destinée à être couplée à ladite broche d'activation, une première sortie, et une seconde sortie destinée à être couplée à ladite entrée d'activation de l'interface de communication (IC), et connectant leur entrée à leur première ou seconde sortie selon qu'ils sont placés dans un premier état ou un second état, et ii) des moyens de commande (MCD) comportant une entrée couplée à ladite première sortie des moyens d'aiguillage (MA) et une sortie destinée à être couplée à ladite interface de réveil (IR), et délivrant sur cette sortie ledit premier signal en cas de placement desdits moyens d'aiguillage (MA) dans leur premier état et de réception par ces derniers (MA) d'un signal de réveil issu dudit outil de configuration (OC), ledit premier signal induisant un placement desdits moyens d'aiguillage (MA) dans leur second état.

3. Dispositif selon la revendication 2, **caractérisé en ce que** lesdits moyens de commande (MCD) sont agencés sous la forme d'une bascule.

4. Dispositif selon la revendication 3, **caractérisé en ce que** ladite bascule (MCD) est synchrone.

5. Dispositif selon l'une des revendications 2 à 4, **caractérisé en ce que** lesdits moyens de contrôle (MCT) comprennent un inverseur (IN) comportant i) une entrée connectée à ladite première sortie des moyens d'aiguillage (MA) et à une source de tension (ST) via une résistance (R2) et ii) une sortie connectée à ladite entrée des moyens de commande (MCD), et délivrant sur cette sortie un signal qui est l'inverse d'un signal reçu sur cette entrée.

6. Dispositif selon l'une des revendications 2 à 5, **caractérisé en ce que** lesdits moyens d'aiguillage (MA) comprennent une entrée de sélection connectée à ladite sortie des moyens de commande (MCD), et passent de leur premier état à leur second état en cas de réception d'un signal de sélection sur leur entrée de sélection.

7. Dispositif selon l'une des revendications 2 à 6, **caractérisé en ce que** lesdits moyens d'aiguillage (MA) sont agencés sous la forme d'un multiplexeur analogique.

8. Calculateur (CV) comprenant une interface de réveil (IR) propre à recevoir un premier signal dédié au réveil dudit calculateur (CV), et une interface de communication (IC) ayant une entrée d'activation couplée à une broche d'activation d'un connecteur (CN) destinée à être couplée mécaniquement et temporairement à une sortie d'activation d'un outil de configuration (OC), **caractérisé en ce qu'**il comprend en outre un dispositif de contrôle (DC) selon l'une des revendications précédentes, intercalé entre, d'une part, ladite broche d'activation et, d'autre part, ladite interface de réveil (IR) et ladite entrée d'activation de l'interface de communication (IC).

9. Calculateur selon la revendication 8, **caractérisé en ce que** ladite interface de communication est de type Ethernet.

10. Véhicule (VA) comprenant un connecteur (CN) ayant une broche d'activation destinée à être couplée mécaniquement et temporairement à une sortie d'activation
d'un outil de configuration (OC), **caractérisé en ce qu'**il comprend au moins un calculateur (CV) selon la revendication 8 ou 9, et/ou au moins un dispositif de contrôle (DC) selon l'une des revendications 1 à 7.

## Patentansprüche

1. Steuervorrichtung (DC) zur Steuerung des Zugriffs auf einen Rechner (CV), der eine Weckschnittstelle (IR) umfasst, wobei die Steuervorrichtung so ausgelegt ist, dass sie ein erstes Signal (S1) aussendet, das dem Wecken des Rechners (CV) gewidmet ist, der Rechner (CV) auch eine Kommunikationsschnittstelle (IC) umfasst, die einen Aktivierungseingang aufweist, der mit einem Aktivierungsstift eines Verbinders (CN) gekoppelt ist, der dazu bestimmt ist, mechanisch und temporär mit einem Aktivierungsausgang eines Konfigurationswerkzeugs (OC) gekoppelt zu werden, wobei die Steuervorrichtung dazu ausgelegt ist, ein zweites Signal (S2) auszugeben, das der Aktivierung der Kommunikationsschnittstelle (IC) gewidmet ist, **dadurch gekennzeichnet, dass** sie Steuermittel (MCT) umfasst, die, sobald sie zwischen dem Aktivierungsstift einerseits und der Weckschnittstelle (IR) und dem Aktivierungseingang der Kommunikationsschnittstelle (IC) andererseits eingefügt sind, entweder die Weckschnittstelle (IR) mit dem ersten Signal oder den Aktivierungseingang der Kommunikationsschnittstelle (IC) mit dem zweiten Signal versorgen, je nachdem, ob sie von dem Konfigurationswerkzeug (OC) über den Aktivierungsstift in einen ersten Zustand oder einen zweiten Zustand gebracht werden.

2. . Vorrichtung nach Anspruch 1, **dadurch gekennzeichnet, dass** die Steuermittel (MCT) i) Weichenmittel (MA) mit einem Eingang, der mit dem Aktivierungsstift gekoppelt werden soll, einem ersten Ausgang und einem zweiten Ausgang, der mit dem Aktivierungseingang der Kommunikationsschnittstelle (IC) gekoppelt werden soll, umfassen und ihren Eingang mit ihrem ersten oder zweiten Ausgang verbinden, je nachdem, ob sie in einen ersten Zustand oder einen zweiten Zustand versetzt werden, und ii) Steuermittel (MCD) mit einem Eingang, der mit dem ersten Ausgang der Weichenmittel (MA) gekoppelt ist, und einem Ausgang, der mit der Weckschnittstelle (IR) gekoppelt werden soll, und die an diesem Ausgang das erste Signal liefern, falls die Weichenmittel (MA) in ihren ersten Zustand gebracht werden und diese (MA) ein Wecksignal aus dem Konfigurationswerkzeug (OC) empfangen, wobei das erste Signal ein Bringen der Weichenmittel (MA) in ihren zweiten Zustand bewirkt.

3. . Vorrichtung nach Anspruch 2, **dadurch gekennzeichnet, dass** die Steuermittel (MCD) in Form einer Wippe angeordnet sind.

4. . Vorrichtung nach Anspruch 3, **dadurch gekennzeichnet, dass** die Wippe (MCD) synchron ist.

5. . Vorrichtung nach einem der Ansprüche 2 bis 4, **dadurch gekennzeichnet, dass** die Steuermittel (MCT) einen Inverter (IN) umfassen, der i) einen Eingang, der über einen Widerstand (R2) mit dem ersten Ausgang der Weichenmittel (MA) und mit einer Spannungsquelle (ST) verbunden ist, und ii) einen Ausgang aufweist, der mit dem Eingang der Steuermittel (MCD) verbunden ist und an diesem Ausgang ein Signal liefert, das die Umkehrung eines an diesem Eingang empfangenen Signals ist.

6. . Vorrichtung nach einem der Ansprüche 2 bis 5, **dadurch gekennzeichnet, dass** die Weichenmittel (MA) einen Auswahleingang umfassen, der mit dem Ausgang der Steuermittel (MCD) verbunden ist, und von ihrem ersten Zustand in ihren zweiten Zustand übergehen, wenn an ihrem Auswahleingang ein Auswahlsignal empfangen wird.

7. . Vorrichtung nach einem der Ansprüche 2 bis 6, **dadurch gekennzeichnet, dass** die Weichenmittel (MA) in Form eines analogen Multiplexers angeordnet sind.

8. . Rechner (CV) mit einer Weckschnittstelle (IR), die geeignet ist, ein erstes Signal zu empfangen, das dem Wecken des genannten Rechners (CV) gewidmet ist, und einer Kommunikationsschnittstelle (IC) mit einem Aktivierungseingang, der mit einem Aktivierungsstift eines Verbinders (CN) gekoppelt ist, der dazu bestimmt ist, mechanisch und zeitweilig mit einem Aktivierungsausgang eines Konfigurationswerkzeugs (OC) gekoppelt zu werden, **dadurch gekennzeichnet, dass** es ferner eine Steuervorrichtung (DC) nach einem der vorhergehenden Ansprüche umfasst, die zwischen dem Aktivierungsstift einerseits und der Weckschnittstelle (IR) und dem Aktivierungseingang der Kommunikationsschnittstelle (IC) andererseits eingefügt ist.

9. . Rechner nach Anspruch 8, **dadurch gekennzeichnet, dass** die Kommunikationsschnittstelle vom Typ Ethernet ist.

10. . Fahrzeug (VA) mit einem Stecker (CN) mit einem Aktivierungsstift, der dazu bestimmt ist, mechanisch und temporär mit einem Aktivierungsausgang eines Konfigurationswerkzeugs (OC) gekoppelt zu werden, **dadurch gekennzeichnet, dass** es mindestens einen Rechner (CV) nach Anspruch 8 oder 9 und/oder mindestens eine Steuervorrichtung (DC) nach einem der Ansprüche 1 bis 7 aufweist.

## Claims

1. A control device (DC) for controlling access to a computer (CV) comprising a wake-up interface (IR), said control device being adapted to emit a first signal (S1) dedicated to wake-up said computer (CV) said computer (CV) also comprising a communication interface (IC) having an activation input coupled to an activation pin of a connector (CN) intended to be mechanically and temporarily coupled to an activation output of a configuration tool (OC), said control device being adapted to emit a second signal (S2) dedicated to the activation of said communication interface (IC) **characterized in that** it comprises control means (MCT) supplying, once interposed between, on the one hand, said activation pin and, on the other hand, said wake-up interface (IR) and said activation input of the communication interface (IC), either said wake-up interface (IR) with said first signal, or said activation input of the communication interface (IC) with said second signal, depending on whether they are placed in a first state or a second state by said configuration tool (OC) via said activation pin.

2. Device according to claim 1, **characterized in that** said control means (MCT) comprise i) switching means (MA) having an input to be coupled to said activation pin, a first output, and a second output to be coupled to said activation input of the communication interface (IC), and connecting their input to their first or second output according to whether they are placed in a first state or a second state, and ii) control means (MCD) comprising an input coupled to said first output of the switching means (MA) and an output intended to be coupled to said wake-up interface (IR), and delivering on this output said first signal in case of placement of said switching means (MA) in their first state and of reception by the latter (MA) of a wake-up signal coming from said configuration tool (OC), said first signal inducing a placement of said switching means (MA) in their second state

3. Device according to claim 2, **characterized in that** said control means (MCD) are arranged in the form of a flip-flop.

4. Device according to claim 3, **characterized in that** said flip-flop (MCD) is synchronous.

5. Device according to one of claims 2 to 4, **characterized in that** said control means (MCT) comprise an inverter (IN) comprising i) an input connected to said first output of the switching means (MA) and to a voltage source (ST) via a resistor (R2) and ii) an output connected to said input of the control means (MCD), and delivering on this output a signal which is the inverse of a signal received on this input.

6. Device according to one of claims 2 to 5, **characterized in that** said switching means (MA) comprise a selection input connected to said output of the control means (MCD), and pass from their first state to their second state in case of reception of a selection signal on their selection input.

7. Device according to one of claims 2 to 6, **characterized in that** said switching means (MA) are arranged in the form of an analog multiplexer.

8. A computer (CV) comprising a wake-up interface (IR) adapted to receive a first signal dedicated to the wake-up of said computer (CV), and a communication interface (IC) having an activation input coupled to an activation pin of a connector (CN) intended to be mechanically and temporarily coupled to an activation output of a configuration tool (OC) **characterized in that** it further comprises a control device (DC) according to one of the preceding claims, interposed between, on the one hand, said activation pin and, on the other hand, said wake-up interface (IR) and said activation input of the communication interface (IC).

9. A computer according to claim 8, **characterized in that** said communication interface is of Ethernet type.

10. Vehicle (VA) comprising a connector (CN) having an activation pin to be mechanically and temporarily coupled to an activation output of a configuration tool (OC), **characterized in that** it comprises at least one computer (CV) according to claim 8 or 9, and/or at least one control device (DC) according to one of claims 1 to 7.
